Europäisches Patentamt

European Patent Office

Office européen des brevets

(19)

(11) Veröffentlichungsnummer: **0 259 571**
**A2**

(12) **EUROPÄISCHE PATENTANMELDUNG**

(21) Anmeldenummer: 87110126.7

(51) Int. Cl.⁴: **B29B 7/76**

(22) Anmeldetag: 14.07.87

(30) Priorität: 27.08.86 DE 3629041

(43) Veröffentlichungstag der Anmeldung:
16.03.88 Patentblatt 88/11

(84) Benannte Vertragsstaaten:
AT BE CH ES FR GB GR IT LI LU NL SE

(71) Anmelder: Klöckner Ferromatik Desma GmbH
Riegeler Strasse 4
D-7831 Malterdingen(DE)

(72) Erfinder: Pontius, Klaus, Dipl.-Ing.
Schulstrasse 88
D-5508 Hermeskeil(DE)
Erfinder: Settinger, Manfred, Dipl.-Ing.
Weinbergstrasse 23
D-5511 Ockten(DE)

(74) Vertreter: Kiefer, Winfried, Dipl.-Phys.
Klöckner-Werke Aktiengesellschaft
Patentabteilung Klöcknerstrasse 29
D-4100 Duisburg 1(DE)

(54) Verfahren zum Herstellen eines chemisch reagierenden Gemisches aus mindestens zwei Komponenten, insbesondere eines zu Polyurethan ausreagierenden Gemisches aus Isocyanat und Polyol, sowie Mischköpfe zum Herstellen chemisch reagierender Gemische.

(57) Zum Herstellen eines chemisch reagierenden Gemisches aus mindestens zwei Komponenten, insbesondere eines zu Polyurethan ausreagierenden Gemisches aus Isocyanat und Polyol, kommt ein Mischkopf zum Einsatz, der eine Bohrung mit einem axial verschiebbaren Stößel und in der Wandung der Bohrung unter Bildung einer Mischkammer zwei Düsen zum Zuführen der Komponenten aufweist. Zur dynamischen Vorgabe des Mischungsvordruckes werden in Strömungsrichtung des Gemisches unterhalb der Mischkammer quer zu ihrer Achse mindestens zwei Querschieber mit jeweils einem Durchbruch angeordnet, wobei während des Mischens die beiden Querschieber Oszillationsschwingungen ausführen und daß der im zeitlichen Mittel von den beiden Durchbrüchen freigegebene lichte Querschnitt durch die Vorgabe der Frequenz und/oder Amplituden und der Phasenverschiebung der Oszillationsschwingungen bestimmt wird. An die Stelle der Querschieber können auch zwei koaxiale Drehkörper mit jeweils einer Querbohrung treten.

### Verfahren zum Herstellen eines chemisch reagierenden Gemisches aus mindestens zwei Komponenten, insbesondere eines zu Polyurethan ausreagierenden Gemisches aus Isocynanat und Polyol, sowie Mischköpfe zum Herstellen chemisch reagierender Gemische

Die Erfindung betrifft ein Verfahren zum Herstellen eines chemisch reagierenden Gemisches aus mindestens zwei Komponenten, insbesondere eines zu Polyurethan ausreagierenden Gemisches aus Isocynanat und Polyol, sowie Mischköpfe zum Herstellen chemisch reagierender Gemische.

Generell weisen Mischköpfe zum Herstellen chemisch reagierender Gemische aus mindestens zwei Komponenten, insbesondere zu Polyurethan ausreagierenden Gemischen aus Isocynanat und Polyol eine Bohrung mit einer offenen Stirnseite auf, die die Austrittsöffnung für das Gemisch bildet, an die sich der Hohlraum einer Form zum Herstellen von Formkörpern anschließt.

In etwa im mittleren Bereich der Bohrung sind in der Wandung einander gegenüber zwei Düsen angeordnet, iber die zum Beispiel Isocynanat und Polyol der Bohrung zugeführt werden, aufeinander prallen und vermischt werden. Dieser Bereich der Bohrung wird allgemein als Mischkammer bezeichnet.

Die Bohrung führt einen als Reinigungsstößel bezeichneten Stößel, der sich während des Mischens der Komponenten in einer Stellung oberhalb der beiden Düsen befindet.

Der Grad der Vermischung hängt von dem Mischungsdruck ab, d.h. dem Druck, der sich in der Mischkammer während des Vermischens der Komponenten einstellt.

Es ist bekannt,unterhalb der Mischkammer, d.h. in Strömungsrichtung des Gemisches vor dem Mischen in radialer Richtung in die Mischkammer einen einen Staukörper einzuschieben und über die Eintauchtiefe des Staukörpers den Mischungsdruck einzustellen (DBP 20 65 841).

Nach dem Mischen wird der Staukörper in die Stellung gebracht, in der er die Bohrung freigibt (Ruhestellung). Der Stößel wird anschließend in der Bohrung in Richtung zur Form axial verschoben und fördert das Gemisch aus dem Mischkopf in die sich unmttelbar an die Austrittsöffnung der Bohrung anschließende Form, in der es zu Formkörpern aus Polyurethan ausreagiert. Gleichzeitig reinigt der Stößel durch seine axiale Verschiebung die Bohrung und die Mischkammer von etwaigen Resten des chemisch reagierenden Gemisches, der aus diesm Grunde als Reinigungsstößel bezeichnet ist.

Es ist weiterhin bekannt, zum Aufbau eines Mischungsdruckes in Strömungsrichtung des Gemisches unterhalb der Mischkammer einen verschwenkbaren Drehkörper mit Querbohrung anzuordnen, dessen Achse senkrecht zur Achse der Mischkammer verläuft. Während der axialen Bewegung des Stößels fluchtet die Querbohrung mit der den Stößel führenden Bohrung, während beim Mischen der Komponenten die Achse des Drehkörpers mit der Achse der den Stößel führenden Bohrung einen vorgegebenen festen Winkel zur Vorgabe des Mischungsdrucks einschließt (DE-OS 30 22 132.1).

Es ist auch bekannt (DE-PS 23 27 269), das die Mischkammer verlassende chemisch reagierende Gemisch unter Umlenkung der Strömungsrichtung in eine weitere, ebenfalls einen Reinigungsstößel aufweisende Bohrung strömen zu lassen, aus der es dann in die Form strömt. Im allgemeinen schließt die Achse der Mischkammer mit der Achse der weiteren Bohrung einen Winkel von 90° ein (Umlenkung von 90°).

In dieser weiteren Bohrung prallt das aus der Mischkammer kommende chemisch reagierende Gemisch gegen die der Austrittsöffnung gegenüberliegende Wandung der weiteren Bohrung auf, so daß die Geschwindigkeit des chemisch reagierenden Gemisches unter gleichzeitiger Verwirbelung (Nachvermischung) erheblich herabgesetzt wird.

Es ist weiterhin bekannt (DE-PS 33 40 889), während des Herstellens des zu Polyurethan ausreagierenden Gemisches unterhalb der Mischkammer den Gemischstrom in mehrere Teilströme zu unterteilen, die teils beschleunigt, teils verzögert und anschließend wieder zusammengeführt werden. Hierdurch soll eine verbesserte Vermischung und eine kürzere Verweilzeit des ausreagierenden Gemisches im Mischkopf unter gleichzeitiger verbesserter Homogenisierung erreicht werden.

Zu diesem Zwecke sind in Strömungsrichtung unterhalb der Mischkammer im Mischkopf zwei um eine gemeinsame Achse verschwenkbare und als Doppelschieber bezeichnete Drehkörper mit Querbohrungen vorgesehen, die so ausgebildet sind, daß sie in ihrer Arbeitsstellung, d.h. während des Mischens der Komponenten, miteinander sogenannte Überströmkanäle bilden, die die Unterteilung des Gemischstromes in beschleunigte und verzögerte Teilströme bewirken, während des Mischens schließen die Achsen der Querbohrungen mit der Achse der den Stößel führenden Bohrung einen festen Winkel ein.

Nach dem Stand der Technik werden die Staukörper bzw. die Doppelschieber zu Beginn des Mischens in eine definierte Stellung unterhalb der Mischkammer gebracht, in der sie bis zum Ende des Mischens verbleiben, werden anschließend in die Stellung gebracht, in der der Reinigungsstößel sie unbehindert zum Ausschieben des ausreagierenden Gemisches axial durchfahren kann. Anschließend wird nach Beendigen der Reinigungsphase der Reinigungsstößel in seine Endstellung oberhalb der Mischkammer axial verscho-ben, während gleichzeitig die Staukörper bzw. Doppelschieber wieder in ihre Arbeitsstellung während des Mischens gebracht werden.

Die Festlegung des Mischvordruckes erfolgte bisher in allen diesen Fällen vorab durch die konstruktive Auslegung, indem in Abhängigkeit des Durchmessers der den Stößel führenden Bohrung und damit der Mischkammer die Abmessungen und die Eintauchtiefe der Staukörper bzw. die Winkelstellung der Drehkörper und die Abmessungen ihrer Querbohrungen im Hinblick auf die zu mischenden Komponenten festgelegt wurden.

Eine Vorgabe des Mischungsvordrucks durch die konstruktive Auslegung der Mischköpfe ist im Hinblick auf eine optimale Fertigungsqualität im allgemeinen nicht möglich, da die Zähigkeit der Komponenten und auch die Zähigkeit des chemisch reagierenden Gemisches temperaturabhängig sind. Sie ändert sich zudem, falls zum Beispiel Zusätze wie z.B. Blähmittel in der Mischkammer dem Gemisch über weitere Düsen zugeführt werden.

Im allgemeinen ändert sich die Zähigkeit des chemisch reagierenden Gemisches bei geänderten Mischungsverhältnissen der Komponenten.

Weiterhin beeinflußt im allgemeinen die mittlere Verweilzeit des chemisch reagierenden Gemisches ebenfalls die Zähigkeit, da bei größer werdender Verweilzeit die im Gemisch ablaufenden chemischen Prozesse stärker fortgeschritten sind als bei kleinen Verweilzeiten. Die Erfindung geht von der Erkenntnis aus, daß durch die bisherige konstruktive Auslegung der Mischköpfe diese Effekte und Einflüsse wegen der Vielzahl der Parameter nicht in den Griff zu bekommen sind.

Der Erfindung liegt die Aufgabe zugrunde, ein Verfahren zum Herstellen eines chemisch reagierenden Gemisches aus mindestens zwei Komponenten, insbesondere eines zu Polyurethan ausreagierenden Gemisches aus Isocyanat und Polyl, zu schaffen, das im Hinblick auf die Zusammensetzung der chemisch reagierenden Gemische und im Hinblick auf die optimale Beschaffenheit der herzustellenden Formkörper ein Mischen unter dem optimalen Mischungsvordruck sicherstellt.

Gemäß einem ersten Lösungsprinzip wird diese Aufgabe dadurch gelöst, daß in Strömungsrichtung des Gemisches unterhalb der Mischkammer quer zu ihrer Achse mindestens zwei Querschnitte mit jeweils einem Durchbruch angeordnet werden und daß während des Mischens die beiden Querschieber Oszillationsschwingungen ausführen und daß der im zeitlichen Mittel von den beiden Durchbrüchen freigegebene lichte Querschnitt durch die Vorgabe der Frequenz und/oder Amplituden und der Phasenverschiebung der Oszillationsschwingungen bestimmt wird.

Unter Querschieber sind im Sinne der Erfindung im einfachsten Falle Flachprofile mit einem Durchbruch zu verstehen, wobei der Durchbruch den gleichen Querschnitt wie die Mischkammer hat.

Im Sinne der Erfindung sind unter Oszillationsschwingungen hin-und hergehende Bewegungen der Querschieber zu verstehen; d.h. hin-und hergehende Bewegungen in ihrer Ebene.

Während des Mischens begrenzen beide - schwingenden Durchbrüche eine lichte Öffnung, deren Querschnitt im zeitlichen Mittel konstant ist und der kleiner ist als der Querschnitt der Mischkammer. Durch Vorgabe der Amplituden, Frequenzen und Phasenlage wird dieser lichte Querschnitt eingestellt, d.h. es ist ohne weiteres möglich, den optimalen Mischungsvordruck experimentell vorab zu bestimmen und dann zum Herstellen von Formkörpern die entsprechende Einstellung der beiden Querschieber vorzunehmen.

In einer weiteren Ausgestaltung der Erfindung vollführt mindestens der eine als Rundprofil ausgebildete Querschieber zusätzlich Torsionsschwingungen um seine Achse. Unter Torsions - schwingungen im Sinne der Erfindung sind Schwingungen zu verstehen, die ein Querschieber um seine Achse senkrecht zur Achse der den Stößel führenden Bohrung vollführt.

Durch diese zusätzlichen Torsionsschwingungen wird die Homogenisierung des Gemisches gefördert und die hierfür erforder liche Zeit herabgesetzt.

Gemäß einem zweiten Losungsprinzip wird diese Aufgabe dadurch gelöst, daß in Strömungsrichtung unterhalb der Mischkammer quer zu ihrer Achse mindestens zwei als Rundprofile ausgebildete Querschieber mit jeweils einer Querbohrung angeordnet werden, wobei während des Mischens die beiden Querschieber jeweils um ihre Achse Torsionsschwingungen ausführen und der im zeitlichen Mittel von den beiden Durchbrüchen freigegebene lichte Querschnitt durch die Vorgabe der Frequenzen und/oder Torsionsschwingungen bestimmt wird.

Erfindungsgemäß kann zusätzlich mindestens der eine als Rundprofil ausgebildete Querschieber in Richtung seiner Längsachse zusätzlich Oszillationsschwingungen ausführen.

Im Sinne der Erfindung sind unter Torsionsschwingungen der als Rundprofile ausgebildeten Querschieber Pendelbewegungen der Querschieber um ihre Achse zu verstehen, die senkrecht zur Achse der den Reinigungsstößel führenden Bohrung verlaufen.

Gemäß einem dritten Losungsprinzip wird bei einem Mischkopf, der eine Bohrung mit einem axial verschiebbaren Stößel und in der Wandung der Bohrung unter Bildung einer Mischkammer zwei Düsen zum Zuführen der Komponenten aufweist, wobei in Strömungsrichtung des Gemisches unterhalb der Mischkammer mindestens zwei um eine gemeinsame Achse verschwenkbare Drehkörper mit jeweils einer Querbohrung koaxial zueinander angeordnet sind, ihre Achse senkrecht zur Achse der Mischkammer verläuft und die Querbohrungen während der axialen Bewegungen des Stößels mit der ihn führenden Bohrung fluchten, die Aufgabe dadurch gelöst, daß während des Mischens die beiden Drehkörper um ihre gemeinsame Achse Torsionsschwingungen ausführen, und daß der im zeitlichen Mittel von den beiden Querbohrungen freigegebene lichte Querschnitt durch die Vorgabe der Frequenzen und/oder Amplituden und der Phasenverschiebung der Tors-ionsschwingungen bestimmt wird.

In einer weiteren Ausgestaltung dieses Lösungsprinzips ist zur Homogenisierung in einer kürzeren Zeit zwischen den beiden Drehkörpern koaxial ein weiterer Drehkörper angeordnet, der während des Mischens Torsionsschwingungen ausführt.

In völliger Abkehr vom bisherigen Stand der Technik wird der Mischungsvordruck während des Mischens durch oszillierende Querschieber bzw.Torsionsschwingungen ausführende Drehkörper eingestellt, wobei der jeweilige Mischungsvordruck bestimmt ist durch die Frequenzen und die Amplituden dieser Oszillationsbewegungen bzw. Pendelbewegungen.

Durch die erfindungsgemäßen Maßnahmen wird somit während des Mischens der dynamische Strömungswiderstand erzeugt, der im zeitlichen Mittel einen festen vorgebbaren Wert hat. Es ist deshalb erfindungswesentlich, daß stets mindestens zwei Querschieber bzw. mindestens zwei Drehkörper eingesetzt werden.

Der besondere Vorteil gegeniber der bisherigen Vorgabe des Mischungsvordruckes besteht darin, daß jeweils vorab der optimale Mischungsvordruck im Hinblick auf die Eigenschaften der Komponenten, unter anderem im Hinblick auf die Zähigkeit und auch auf die Beschaffenheit der herzustellenden Formkörper bestimmt wird, indem die Frequenzen und/oder die Amplituden der beiden zueinander phasenverschobenen Pendelbewegungen bzw. phasenverschobenen Oszillationsbewegungen so lange geändert werden, bis der jeweils optimale Mischungsvordruck experimentell eingestellt ist, was ohne weiteres anhand von zur Probe hergestellten Formkörpern möglich ist. Es kann auch ohne weiteres der Einfluß der Temperatur auf die Qualität der Formkörper vorab untersucht werden, insbesondere die Abhängig keit des Mischungsvordruckes von der Temperatur, wenn alle anderen Parameter konstant sind wie z.B. der Massestrom der zuzuführenden Komponenten.

Der besondere Vorteil der erfindungsgemäßen Maßnahmen besteht darin, daß in einem weiten Bereich der dynamische Strömungswiderstand eingestellt werden kann, so daß Mischköpfe universtell einsetzbar sind.

In einer weiteren Ausgestaltung der Erfindung führt zu Beginn des Mischens der der Mischkammer benachbarte Querschieber bzw. Drehkörper um eine die Mischkammer verschliessende Ruhelage Oszillations-bzw. Torsionsschwingungen aus und gibt erst ab Erreichen eines vorgegebenen Mischungsvordruckes mit dem (den) weiteren Querschiebern bzw. Drehkörpern den lichten Querschnitt frei.

Durch diese Maßnahmen ergibt sich eine gute Anfangsvermischung und ein schneller Aufbau des Mischungsdruckes.

In einer noch weiteren Ausgestaltung der Erfindung weisen die Mischkammerwandung, die Querschieber bzw. die Drehkörper mindestens einen Druckfühler zur Steuerung bzw. Regelung der Oszillationsschwingungen bzw. Torsionsschwingungen auf.

Durch diese Maßnahmen wird erreicht, daß der mittlere Querschnitt der von den Durchbrüchen bzw. den Querbohrungen dynamisch gebildete lichte Querschnitt in Abhängigkeit des Druckes so geändert wird, daß der Einfluß der Temperatur, Schwankungen des Zuflusses der Komponenten für das Gemisch ausgeregelt werden.

In einer noch weiteren Ausgestaltung der Erfindung besteht der Mischkopf mindestens im Bereich der Mischkammer und/oder bestehen die Querschieber bzw. Drehkörper aus Keramikmaterial.

Insbesondere kommt bei zu Polyurethan ausreagierendem Isocyanat-Polyol-Gemisch Titanoxid zum Einsatz. Es zeigte sich nämlich, daß durch diese Oszillations-bzw. Torsionsschwingungen sich etwaige bildende Filme aus Polyurethan leicht abgetragen werden, da sie auf Titanoxid nur eine geringe Haftfähigkeit aufweisen.

Als Antriebe für die Querschieber und Drehkörper kommen die an sich bekannt und deshalb nicht weiter erläutert sind.

Die Erfindung ist in der Zeichnung anhand von Ausführungsbeispielen erläutert.

Es zeigen:

Fig. 1a, 1b einen Mischkopf im Querschnitt mit zwei Querschiebern während des Mischens bzw. während des Reinigens der Mischkammer,

Fig. 2a, 2b die Ansicht gemäß II-II in Fig. 1a bzw. Fig. 2b,

Fig. 3 schematisch eine Abwandlung des Mischkopfes nach Fig. 1a, 1b,

Fig. 4 ein weiteres Ausführungsbeispiel für die Querschieber,

Fig. 5 ein Ausführungsbeispiel für die als Rundprofile ausgebildeten Querschieber,

Fig. 6a, 6b in der Darstellung der Fig. 1a, 1b ein weiteres Ausführungsbeispiel,

Fig. 7a, 7b ein weiteres Ausführungsbeispiel,

Fig. 8 in der Darstellung der Fig. a ein weiteres Ausführungsbeispiel,

Fig. 9 schematisch den zeitlichen Verlauf des lichten Querschnittes und des Mittelwertes.

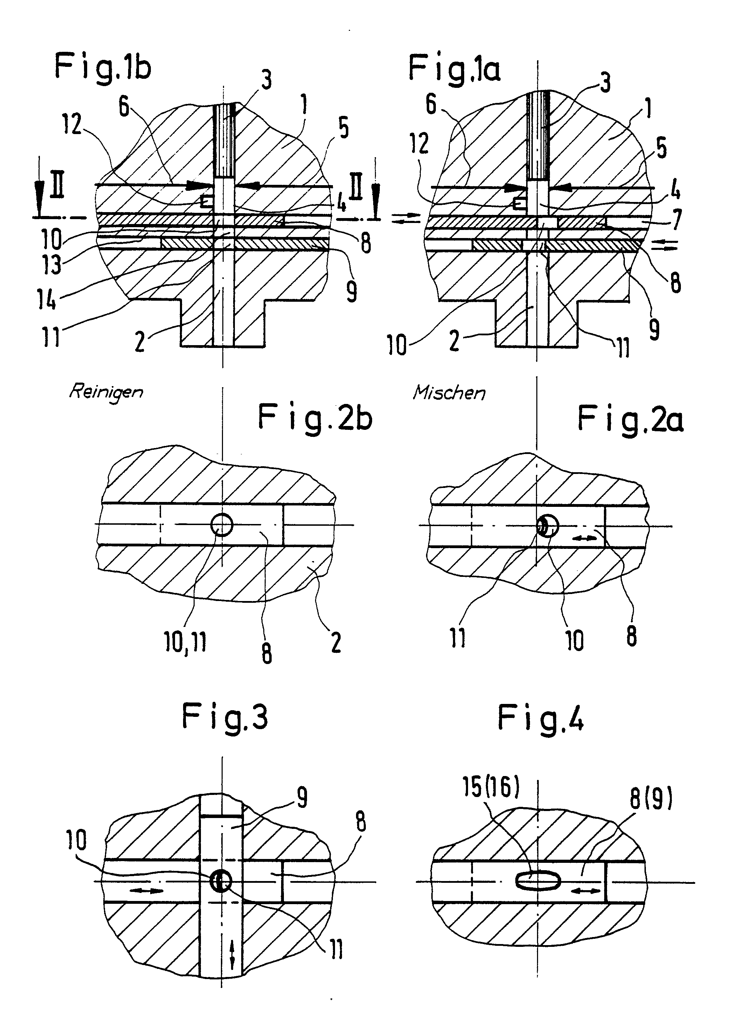

Fig. 1a und 1b zeigen im Längsschnitt einen mit 1 bezeichneten und schematisch dargestellten Mischkopf, wobei in Fig. 1a die Mischstellung und in Fig. 1b die Reinigungsstellung dargestellt ist. Der Mischkopf weist eine Bohrung 2 mit dem Reinigungsstößel 3 auf, deren mittlerer Bereich, der mit 4 bezeichnet ist, die Mischkammer bildet. In der Wandung der Mischkammer sind die Düsen 5 und 6 zum Injizieren von Polyol bzw. Isocyanat angeordnet.

Unterhalb der Mischkammer weist der Mischkopf eine durchgehende Bohrung 7 auf, deren Achse sich mit der Achse der Bohrung 2 schneidet und in der zueinander verschiebbar die beiden Querschieber 8 bzw. 9 angeordnet sind.

Sie sind zwei Flachprofilabschnitte mit jeweils einem Durchbruch 10 bzw. 11, die derart bemessen sind, daß sie während des Reinigens der Mischkammer mit der Bohrung 2 und damit mit der Mischkammer 4 fluchten.

Die Figuren 2a und 2b zeigen gemäß dem Schnitt II-II in Fig. 1a und 1b die eine Stellung der Flachschieber während des Mischens der Komponenten bzw. während des Reinigens der Mischkammer.

Zu Beginn des Mischens befindet sich der Querschieber 8 in einer Stellung, in der er die Mischkammer in Richtung zum zweiten Querschieber sperrt und fürt in dieser Stellung Oszillationsbewegungen aus.

Sobald der Druck in der Mischkammer einen vorgegeben Wert erreicht hat, wird der Querschieber unter weiterem Oszillieren so verschoben, daß er mit dem zweiten Querschieber eine lichte Öffnung freigibt, so daß unter dem herrschenden Mischungsdruck das chemisch reagierende Gemisch in Richtung zur Form (nicht dargestellt) strömt.

In der Wandung der Mischkammer ist ein Druckfühler 12 angeordnet.

In den Fig. 1a und 1b sind die beiden Querschieber durch den Steg 13 mit der Querbohrung 14 getrennt. Hierdurch wird die Zeit für die homogene Durchmischung verkürzt.

Die beiden Querschieber können auch aufeinander gleiten, d.h. der Steg mit der Querbohrung kann auch entfallen. Gemäß den Fig. 1 und 2 oszilieren die beiden Längsschieber in ihrer gemeinsamen Längsrichtung.Dies ist jedoch nicht erforderlich. Beide Längsschieber können auch mit ihren Längsachsen einen Winkel von 90 ° einschließen. Dies ist in Fig. 3 schematisch dargestellt. Gleiche Teile sind mit gleichen Bezugszeichen bezeichnet.

Im allgemeinen haben die den Reinigungsstößel führende Bohrung und die Mischkammer aus fertigungstechnischen Gründen einen kreisrunden Querschnitt. Der Querschnitt kann im Grunde beliebig sein, so kann er beispielsweise elliptisch ausgebildet sein, so daß dann die Durchbrüche der Querschieber ebenfalls elliptisch auszubilden sind.

In der Fig. 4 sind in einer den Figuren 2a bzw. 2b entsprechenden Darstellung zwei Querschieber dargestellt, die mit Ausnahme der einen elliptischen Durchmesser aufweisenden Durchbrüche 15 bzw. 16 mit den Querschiebern nach der Fig. 1 identisch sind. Gleiche Teile sind mit gleichen Bezugszeichen bezeichnet. Durch die geometrische Ausbildung des Querschnittes der Durchbrüche ist es zusätzlich zu der Vorgabe der Frequenzen und der Amplituden möglich, den zeitlichen Verlauf des Öffnens und Schließens des lichten Querschnittes zu beeinflussen.

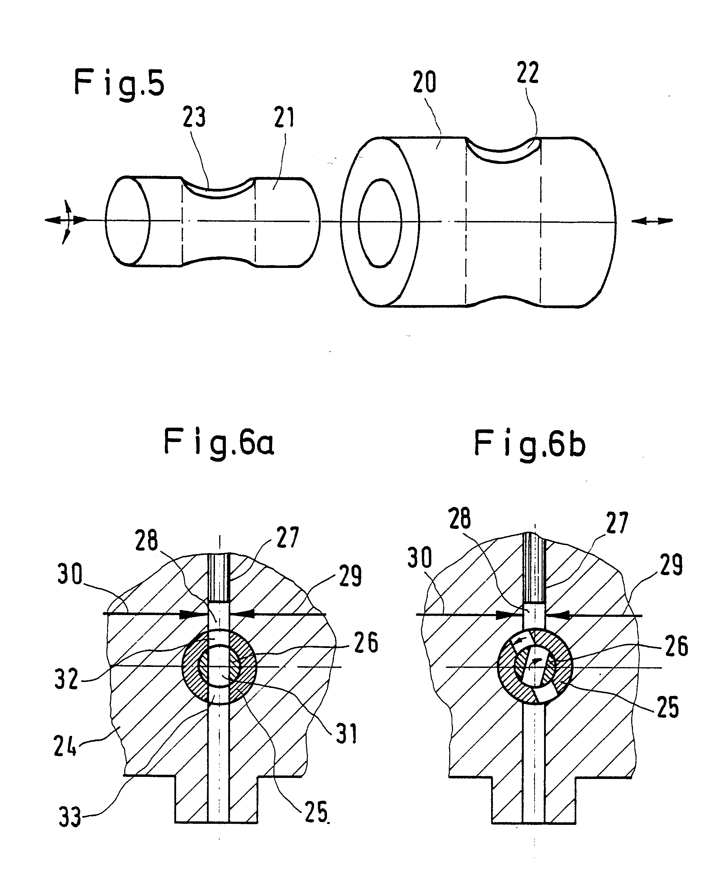

Die Fig. 5 zeigt schematisch in perspektivischer Darstellung zwei Querschieber, die in Abwandlung der beiden Querschieber in Fig. 1 bzw. in der Fig. 4 als Rund@rofile ausgebildet und mit 20 und 21 bezeichnet sind. Beide als Rundprofile ausgebildeten Querschieber weisen als Durchbrüche ausgebildete Querbohrungen 22 bzw. 23 auf, die den gleichen Durchmesser wie die Durchbrüche 15 und 16 in Fig. 4 haben. Der Querschieber 22 führt zusätzlich - wie durch den Doppelpfeil angezeigt-Torsionsschwingungen um seine Achse auf.

Die beiden Rundprofile können auch Torsionsschwingungen um ihre jeweilige Achse ausführen.

Fig. 6 zeigt in der Darstellung der Fig. 1a und Fig. 1b einen Mischkopf mit zwei konzentrisch und koaxial unterhalb der Mischkammer angeordneten Drehkörpern, die mit 25 bzw. 26 bezeichnet sind.

Mit 27 ist die den Reinigungsstößel führende Bohrung, mit 28 ist der die Mischkammer bildende Abschnitt dieser Bohrung bezeichnet, die Düsen zum Zuführen des Polyols und des Isocyanats mit 29 bzw. 30 bezeichnet.

Der Drehkörper 26 ist als Vollzylinder und der Drehkörper 25 als Hohlzylinder ausgebildet, die koaxial zueinander angeordnet sind und deren Achsen zusammenfallen. Ihre gemeinsame Achse - schneidet die Achse der Bohrung 27 im vorliegenden Falle unter einem Winkel von 90 °.

Der Drehkörper 26 weist eine Querbohrung 31 und der Drehkörper 25 ebenfalls eine Querbohrung auf, die aus den beiden Bohrungsabschnitten 32 und 33 bestehen, die miteinander fluchten.

Diese Querbohrungen 31, 32 und 33 haben den gleichen Durchmesser wie die Bohrung 27 und fluchten mit ihr während der Reinigungsphase.

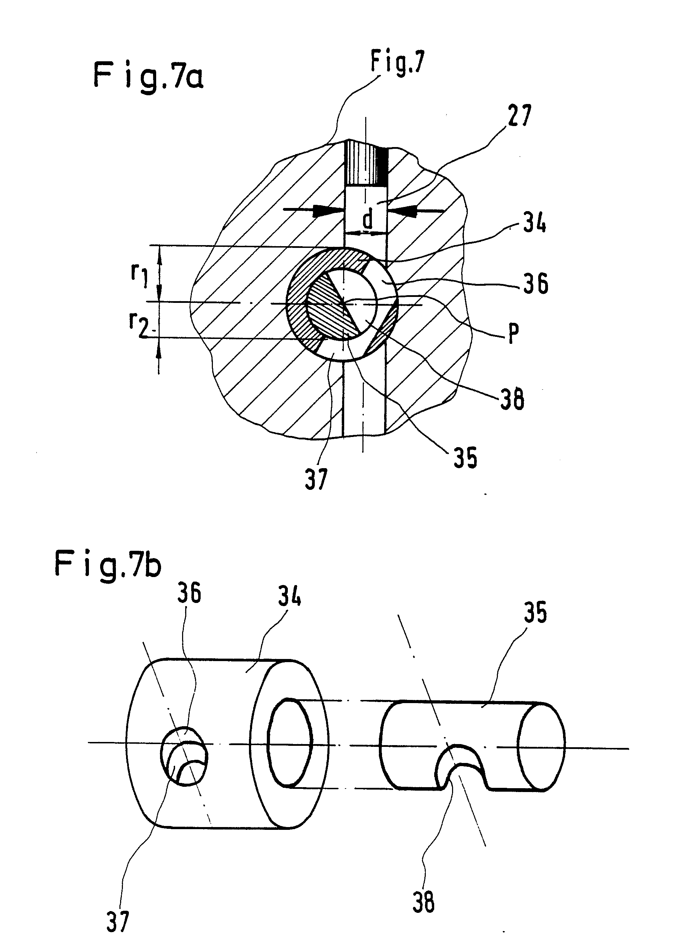

Fig. 7a zeigt eine Abwandlung des in Fig. 6 dargestellten Mischkopfes. Gleiche Teile sind mit gleichen Bezugszeichen bezeichnet.

Die Drehachse der beiden mit 34 und 35 bezeichneten Drehkörper ist ebenfalls senkrecht zur Achse der den Reinigungsstößel 27 führenden Bohrung angeordnet, verläuft jedoch in einem Abstand zu der Achse dieser Bohrung 27. In der Fig. 7 ist der Durchmesser der Bohrung 27 mit d, der Radius des Drehkörpers 34 mit $r_1$ und der Radius des Drehkörpers 35 mit $r_2$ bezeichnet. Wie aus der Figur ersichtlich, ist der Abstand der gemeinsamen Drehachse der beiden Drehkörper, deren Durchstoßpunkt mit P mit der Zeichenebene bezeichnet ist, von der Achse der Bohrung 27 kleiner als der Radius $r_2$.

Der Drehkörper 34 weist eine Querbohrung auf, die ebenfalls wie in Fig. 6 aus zwei Bohrungsabschnitten 36, 37 besteht, während der Drehkörper 35 anstelle einer Querbohrung eine Auskehlung 38 hat.

In Fig. 7b sind die beiden Drehkörper in einer Explosionsdarstellung gezeichnet.

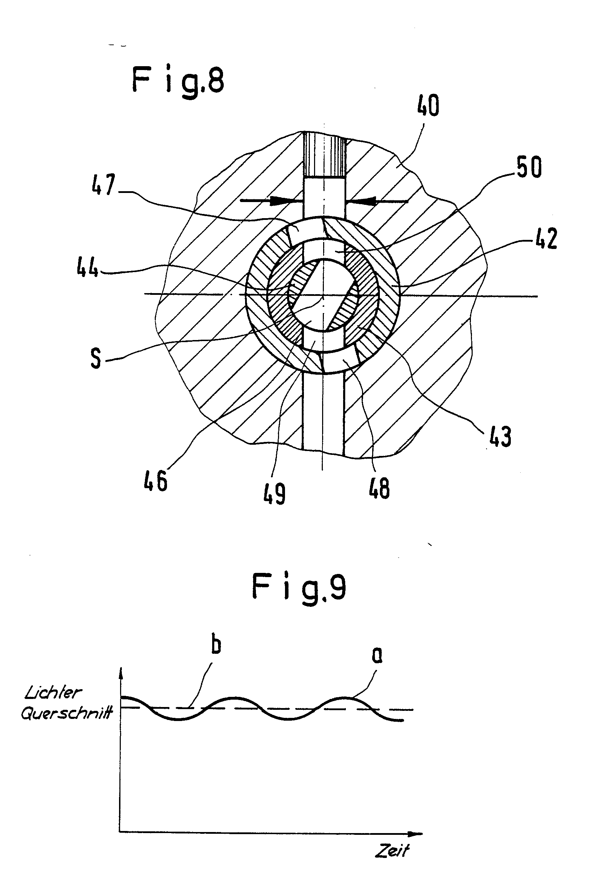

Fig. 8 zeigt ein weiteres Ausführungsbeispiel eines Mischkopfes in der Darstellung der Fig. 1a.

Der mit 40 bezeichnete Mischkopf weist eine den Reinigungsstößel (nicht dargestellt) führende Bohrung 41 auf, die unterhalb der als Mischkammer ausgebildeten Zone drei Drehkörper 42, 43, 44 aufweist, die zueinander koaxial und konzentrisch angeordnet sind und deren gemeinsame Verschwenkachse die Achse der den Reinigungsstößel führenden Bohrung unter einem Winkel von 90 ° schneidet. Der Schnittpunkt dieser beiden Achsen ist mit S bezeichnet. Der äußere Drehkörper ist mit 42, der mittlere mit 43 und der innere mit 44 bezeichnet. Der innere Drehkörper 44 ist ein Vollzylinderabschnitt und weist eine Querbohrung 46 auf, die zu ihm konzentrisch angeordneten Drehkörper 42 und 43 weisen jeweils eine Querbohrung auf, die jeweils aus zwei Bohrungsabschnitten 47 und 48 bzw. 49 und 50 bestehen, den gleichen Durchmesser wie die den Reinigungsstößel führende Bohrung aufweisen und während der Reinigungsphase des Stoßels mit dieser ihn führenden Bohrung damit auch der Mischkammer fluchten.

Während des Mischens können die beiden Drehkörper 46 und 42 gegeneinander oszillieren, während der mittlere Drehkörper 43 in der gezeigten Stellung bleibt, d.h., daß seine Achse mit der Achse der den Reinigungsstößel führenden Bohrung 41 fluchtet.

Der Drehkörper 43 kann zusätzlich eine Oszillationsbewegung vollführen, er kann auch während des Mischens der Drehkörper 44 die gezeigte Stellung einnehmen und in dieser bleiben, während die beiden Drehkörper 42 und 43 Osillationsbewegungen ausführen.

Durch die erfindungsgemäße Verwendung von mindestens zwei Querschiebern bzw. mindestens zwei Drehkörpern wird ein dynamischer Mischungsdruck aufgebaut, der im wesentlichen einen Rückfluß von Gemisch vom Bereich des lichten Querschnitts in die Mischkammer unterbindet.

Dies ist in Fig. 9 schematisch dargestellt (Linie a). Aufgrund der Masseträgheit des Gemisches und des erfindungsgemäß ausgebildeten stark gedämpfen Systems wirkt sich der lichte Querschnitt im zeitlichen Mittel (Linie b) wie ein zeitlich konstanter Strömungswiderstand aus, der erfindungsgemäß dynamisch erzeugt wird.

Während des Reinigens der Mischkammer fluchten die Durchbrüche Querschieber und die Querbohrungen der Drehkörper mit der Mischkammer.

Erfindungsgemäß kann je nach Stellung der Querschieber bzw. Drehkörper ein Vorlauf der Komponenten ausgesteuert und die Mischintensität bei geringem Druckverlust verbessert werden.

Erfindungsgemäß können die Oszillationsschwingungen und die Torsionsschwingungen so eingestellt werden, daß einberuhigter Gemischaustrag aus den Mischköpfen gewährleistet ist.

**Ansprüche**

1. Verfahren zum Herstellen eines chemisch reagierenden Gemisches aus mindestens zwei Komponenten, insbesondere eines zu Polyurethan ausreagierenden Gemisches aus Isocyanat und Polyol, mit einem Mischkopf, der eine Bohrung mit einem axial verschiebbaren Stößel und in der Wandung der Bohrung unter Bildung einer Mischkammer zwei Düsen zum Zuführen der Komponenten aufweist,

dadurch gekennzeichnet,

daß in Strömungsrichtung des Gemisches unterhalb der Mischkammer quer zu ihrer Achse mindestens zwei Querschieber mit jeweils einem Durchbruch angeordnet werden und daß während des Mischens die beiden Querschieber Oszillationsschwingungen ausführen und daß der im zeitlichen Mittel von den beiden Durchbrüchen freigegebene lichte Querschnitt durch die Vorgabe der Frequenz und/oder Amplituden und der Phasenverschiebung der Oszillationsschwingungen bestimmt wird.

2.Verfahren nach Anspruch 1,
dadurch gekennzeichnet,
daß der eine als Rundprofil ausgebildete Querschieber um seine Längsachse zusätzlich Torsionsschwingungen ausführt.

3. Verfahren zum Herstellen eines chemisch reagierenden Gemisches aus mindestens zwei Komponenten, insbesondere eines zu Polyurethan ausreagierenden Gemisches aus Isocyant und Polyol, mit einem Mischkopf, der eine Bohrung mit einem axial verschiebbaren Stößel und in der Wandung der Bohrung unter Bildung einer Mischkammer zwei Düsen zum Zuführen der Komponenten aufweist,
dadurch gekennzeichnet,
daß in Strömungsrichtung des Gemisches quer zur ihrer Achse mindestens zwei als Rundprofile ausgebildete Querschieber mit jeweils einer Querbohrung angeordnet werden und daß während des Mischens die beiden Querschieber jeweils um ihre Achse Torsionsschwingungen ausführen und daß der im zeitlichen Mittel von den beiden Durchbrüchen freigegebene lichte Querschnitt durch die Vorgabe der Frequenzen und/oder Amplituden und der Phasenverschiebung der Tors-ionsschwingungen bestimmt wird.

4. Verfahren nach Anspruch 3,
dadurch gekennzeichnet,
daß mindestens der eine als Rundprofil ausgebildete Querschieber in Richtung seiner Längsachse zusätzlich Oszillationsschwingungen ausführt.

5. Verfahren zum Herstellen eines chemisch reagierenden Gemisches aus mindestens zwei Komponenten, insbesondere eines zu Polyurethan ausreagierenden Gemisches aus Isocyanat und Polyol, mit einem Mischkopf, der eine Bohrung mit einem axial verschiebbaren Stößel und in der Wandung der Bohrung unter Bildung einer Mischkammer zwei Düsen zum Zuführen der Komponenten aufweist, wobei in Strömungsrichtung des Gemisches unterhalb der Mischkammer mindestens zwei um eine gemeinsame Achse verschwenkbare Drehkörper mit jeweils einer Querbohrung koaxial zueinander angeordnet sind, ihre Achse senkrecht zur Achse der Mischkammer verläuft und die Querbohrungen während der axialen Bewegungen des Stößel mit der ihn führenden Bohrung fluchten,
dadurch gekennzeichnet,
daß während des Mischen die beiden Drehkörper um ihre gemeinsame Achse Tors-ionsschwingungen ausführen, und daß der im zeitlichen Mittel von den beiden Querbohrungen freigegebene lichte Querschnitt durch die Vorgabe der Frequenzen und/oder Amplituden und der Phasenverschiebung der Tors-ionsschwingungen bestimmt wird.

6. Verfahren nach Anspruch 5,
dadurch gekennzeichnet,
daß ein zwischen den beiden Drehkörpern koaxial angeordneter weiterer Drehkörper während des Mischens Tors-ionsschwingungen ausführt.

7. Verfahren nach einem der Ansprüche 1 bis 6,
dadurch gekennzeichnet,
daß zu Beginn des Mischens der der Mischkammer benachbarte Querschieber bzw. Drehkörper um eine die Mischkammer verschließende Ruhelage Oszillations-bzw. Torsionsschwingungen ausführt und erst ab Erreichen eines vorgegebenen Mischungsvordruckes mit dem (den) weiteren Querschiebern bzw. Drehkörpern den lichten Querschnitt freigibt.

8. Mischkopf zum Durchführen des Verfahrens nach einem der Ansprüche 1 ibs 7,
dadurch gekennzeichnet,
daß die Mischkammerwandung, die Querschieber bzw. die Drehkörper mindestens einen Druckfühler zur Steuerung bzw. Regelung der Oszillationsschwingungen bzw. Torsionsschwingungen aufweisen.

9. Mischkopf zum Durchführen des Verfahrens nach einem der Ansprüche 1 bis 7 oder nach Anspruch 8,
dadurch gekennzeichnet,
daß der Mischkopf mindestens im Bereich der Mischkammer besteht und/oder die Querschieber bzw. Drehkörper aus Keramikmaterial bestehen.

Fig.1b    Reinigen

Fig.1a    Mischen

Fig.2b

Fig.2a

Fig.3

Fig.4

## Fig.5

## Fig.6a

## Fig.6b

## Fig.7a

Fig.7

27

d

r₁

r₂

34

36

P

38

37

35

## Fig.7b

36  34

35

37

38

# Fig.8

# Fig.9